# EUROPEAN PATENT SPECIFICATION

(11) **EP 2 090 854 B1**
(45) Date of publication and mention of the grant of the patent: **30.11.2016**
(21) Application number: 08021910.8
(22) Date of filing: 17.12.2008
(51) Int. Cl.: F25D 17/04, F16K 15/03

(54) **Electric device for cooling and stooring foods**
Elektrische Vorrichtung zum Kühlen und Lagern von Lebensmitteln
Dispositif électrique pour refroidir et stocker les aliments

(30) Priority: 15.02.2008 IT RN20080008
(43) Date of publication of application: 19.08.2009
(73) Proprietor: Indesit Company S.p.A., 60044 Fabriano (AN) (IT)
(72) Inventor: Sabatini, Giorgio, 63030 Colli Del Tronto (Ascoli Piceno) (IT); Bomprezzi, Lorenzo, 65124 Pescara (IT)
(74) Representative: Guerci, Alessandro

(56) References cited:
- WO-A1-01/23815
- DE-T2- 69 307 078
- SE-B- 322 533
- US-A- 5 156 015

## Description

This invention relates to an electric device for cooling and storing foods, preferably for household use. For example, these devices comprise fridge freezers, typically of the no-frost type, with two or more compartments, each designed to store foods in a different way at a different temperature.

The term "fridge freezer" is used to denote a device having both a refrigerator compartment and a freezer compartment.

No frost fridge freezers are known which comprise:
- a refrigerator compartment for storing foods;
- a freezer compartment for storing the foods at lower temperatures;
- means for cooling the air in the refrigerator and freezer compartments;
- a conduit for placing the cooling means and the refrigerator compartment in fluid communication with each other;
- a fan for moving the air along the conduit from the cooling means to the refrigerator compartment;
- a shutoff valve for obstructing the conduit and which, when activated, prevents the fluid communication between the refrigerator compartment and the cooling means (this valve is usually referred to as "damper" in the jargon of the trade); the damper valve is usually open when cool air must be allowed into the refrigerator compartment in order to reduce the temperature of the compartment;
- a non-return valve operatively associated with the conduit, said non-return valve comprising a membrane and a supporting mount connected to each other.

The mount defines a passage forming part of the conduit, while the membrane comprises at least one first part that can move between a first position where it faces and is in contact with the mount in order to occlude the passage and a second position where part of it is spaced from the mount.

When the air flows along the conduit from the cooling means to the refrigerator compartment through the passage in the mount, it exerts pressure on the membrane. This causes the first part of the membrane to adopt the second position. When the pressure ceases, the membrane moves back to the first position in contact with the mount, thereby preventing the air from flowing from the refrigerator compartment to the cooling means through the non-return valve. The zone of contact between the membrane and the mount consists of at least one edge running round the passage, this edge being in the form of a flat surface.

Document DE69307078T2 discloses a refrigerator comprising a freezer and fresh food compartments air communicating with each other through a passageway with flexible flaps, an evaporator, a fan installed in the freezer compartment.

Document US5156015A discloses an apparatus for circulating cold air for indirect-cooling of refrigerator with an air duct from evaporator to freezer and guide opening discharging cold air into fresh food compartment.

Document DE69307078T2 discloses an electric device according to the preamble of claim 1.

Fridge freezers of this kind, however, have several disadvantages.

The humid air in the refrigerator compartment tends to cause droplets of moisture to settle on the flat edge of the passage. The surface tension of the water trapped between the membrane and the flat edge may cause the mount and membrane to stick to each other. If the pressure exerted by the air is not high enough to overcome the force of the surface tension of the water, then the air flow produced by the fan cannot enter the refrigerator compartment.

This leads to malfunctioning of the fridge freezer.

This invention therefore has for an aim to overcome the above mentioned disadvantages by providing an electric device for cooling and storing foods and with reduced risk of malfunctions.

These aims and others, which are more apparent in the description which follows, are achieved, in accordance with this invention, by an electric device for cooling and storing foods having the structural and functional characteristics described in the independent claims herein. Alternative embodiments of the device are described in the dependent claims.

Further features of the present invention are more apparent in the detailed description below, with reference to a preferred, non-limiting embodiment, as illustrated in the accompanying drawings.
Figure 1 is a schematic view of an electric device for cooling and storing foods according to the invention.

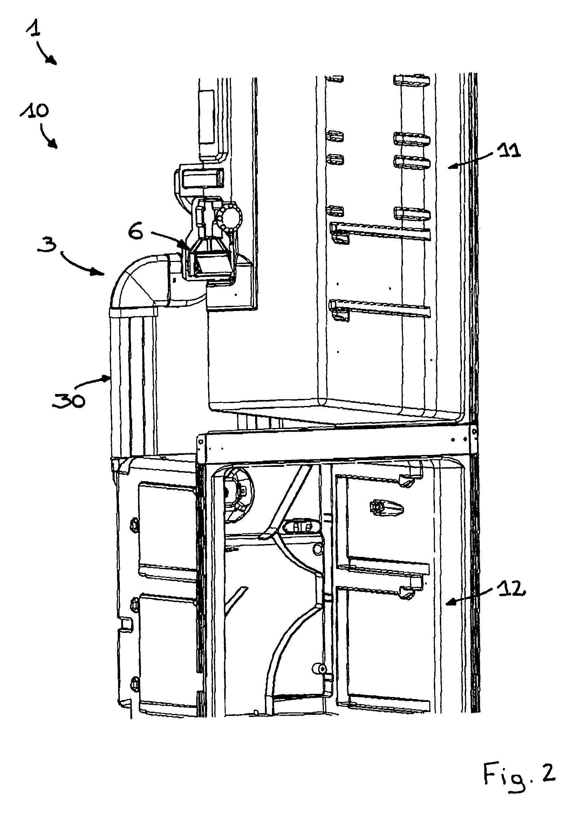

Figure 2 is an interrupted perspective view, with some parts cut away in order to better illustrate others, of an electric device for cooling and storing foods according to the invention.
Figures 3 and 4 show a component of the device of Figure 2 in two different working configurations.
Figures 5 and 6 show two parts of the component of Figures 3 and 4.
Figures 7 and 8 show two alternative embodiments of the parts illustrated in Figures 5 and 6.

With reference to the accompanying drawings, the numeral 1 denotes an electric device for cooling and storing foods, preferably for household use. The device 1 comprises:
- a first compartment 11 for storing foods;
- means 2 for cooling the air used for refrigerating the first compartment 11;
- a conduit 3 for placing the cooling means 2 and the first compartment 11 in fluid communication with each other;
- air movement means 4 which, when activated, force the air to flow from the cooling means 2 to the first compartment 11; these movement means 4 may comprise a fan, for example;
- a shutoff valve 5 for obstructing the conduit 3 and which, when closed, prevents the fluid communication between the first compartment 11 and the cooling means 2.

The shutoff valve 5 (usually known as "damper") is open to allow the first compartment 11 to be cooled.

Advantageously, the device 1 comprises a second compartment 12 for storing foods. Preferably, the first compartment 11 is a refrigerator compartment (where the temperatures are normally between 0 and 10°C) and the second compartment 12 is a freezer (where the temperatures are typically below -15°C). The first compartment 11 may be located either above or below the second compartment 12.

The cooling means 2 are also used to cool the air in the second compartment 12 to better preserve the foods stored in it. In this regard, the movement means 4 are also used to force the air from the cooling means 2 to the second compartment 12.

The air flow movement means 4 are controlled according to the information from a first temperature sensor 8 which detects the temperature in the vicinity of the second compartment 12. The movement means 4 are switched on when the temperature detected by the first sensor 8 exceeds a first predetermined value. The cooling means 2 comprise a refrigerating circuit with a refrigerant fluid flowing in it. More specifically, the refrigerating circuit comprises an evaporator which allows heat exchange with the air used at least for cooling the first compartment 11. The refrigerating circuit also comprises a compressor which moves the refrigerant fluid inside the circuit. Preferably, the movement means 4 and the compressor are switched on simultaneously.

The shutoff valve 5 is controlled according to the information from a second temperature sensor 7 located near the shutoff valve 5. The shutoff valve 5 is opened when the temperature detected by the second temperature sensor 7 is greater than a second predetermined value. Since the shutoff valve 5 and the movement means 4 are controlled, respectively, by the first and second sensors 8, 7 which are independent of each other, the shutoff valve 5 may be open (allowing air to flow through it) even when the movement means 4 are off (that is, when the fan is stopped).

The device 1 comprises a non-return valve 6 operatively associated with the conduit 3.

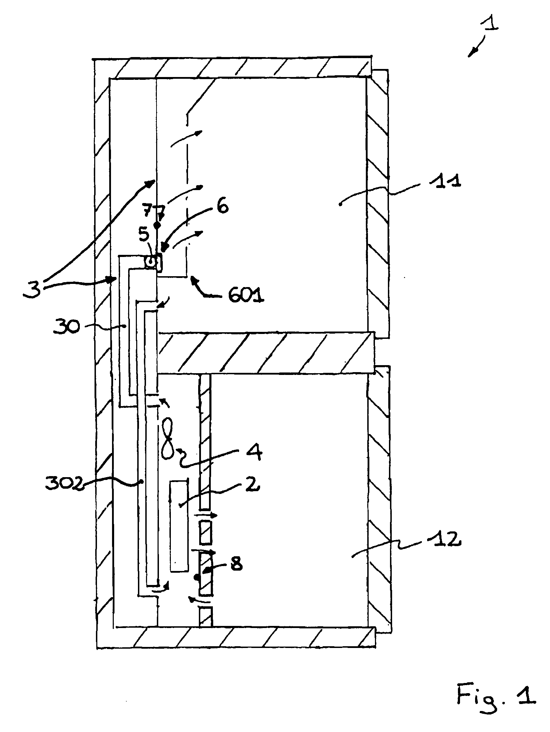

The conduit 3 comprises a tubular element 30 operatively interposed between the cooling means 2 and the non-return valve 6. The conduit 3 also comprises a channel 601 for distributing the air flow in the first compartment 11. The channel 601 is located downstream of the tubular element 30 relative to the direction of air flow from the cooling means 2 to the first compartment 11. The channel 601 can be fluid dynamically connected to the tubular element 30 and enables the air flow to be distributed at different heights in the first compartment 11. As illustrated in Figure 1, a recycling conduit 302 is provided for returning the air from the first compartment 11 to the cooling means 2.

The non-return valve 6 has the important function of preventing the humid air in the first compartment 11 from finding its way into the tubular element 30 when the shutoff valve 5 is open and the movement means 4 are off. The tubular element 30 is designed solely to allow the passage of cold air from the cooling means 2 and this feature reduces the risk of the humid air condensing and freezing inside the tubular element 30.

Relative to the direction of air flow from the cooling means 2 to the first compartment 11, the non-return valve 6 may be located upstream or downstream of the shutoff valve 5.

The non-return valve 6 comprises a membrane 60 and a mount 62 operatively connected. More specifically, the membrane 60 and the mount 62 are fixed to each other.

The mount 62 comprises an opening 63 for the passage of the air, said opening 63 forming part of the conduit 3.

Advantageously, the membrane 60 is flexible. In particular, the membrane 60 comprises at least one first part 61 that can move between a first position where it faces and is in contact with the mount 62 in order to totally occlude the opening 63 and a second position where at least a part of it is spaced from the mount 62.

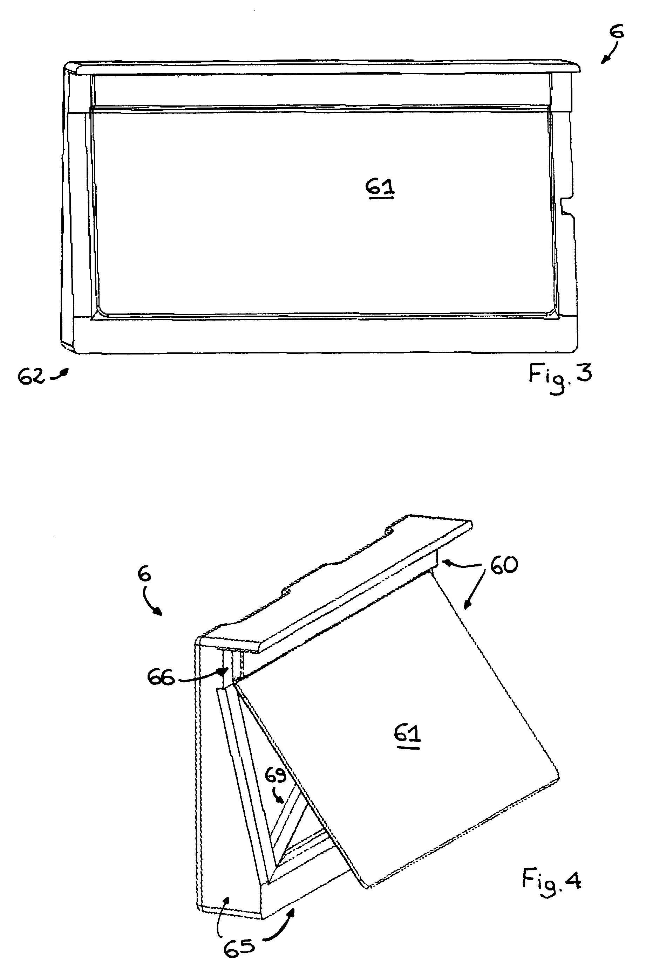

When the air flow produced by the movement means 4 moves along the conduit 3 from the cooling means 2 to the first compartment 11, it goes through the opening 63 of the mount 62, applying pressure on the first part 61 of the membrane 60 which thus adopts the second position (see Figure 4).

When the air flow stops, the first part 61 of the membrane 60 moves to the first position in contact with the mount 62 (see Figure 3). In this way, the opening 63 is occluded and the passage of air from the first compartment 11 to the cooling means 2 is obstructed, even if the shutoff valve 5 is off, that is, open.

The mount 62 comprises at least one protuberance 67 which, when the first part 61 of the membrane 60 is in the first position, extends towards the first part 61 of the membrane 60, forming at least one zone of linear or point contact between the mount 62 and the first part 61 of the membrane 60.

In an alternative embodiment not illustrated, the first part 61 of the membrane 60 comprises at least one protuberance 67 which, when the first part 61 of the membrane 60 is in the first position, extends towards the mount 62, forming a zone of linear or point contact between the mount 62 and the first part 61 of the membrane 60. This embodiment is not preferable, however, because the membrane 60 is more difficult to make this way. Generally speaking, the at least one protuberance 67, when the first part 61 of the membrane 60 is in the first position, reduces the overall zone of contact between the mount 62 and the first part 61 of the membrane 60 compared to a hypothetical situation where each protuberance allowing contact between the mount 62 and the first part 61 of the membrane 60 is absent. This minimizes adhesion caused by the surface tension of the condensed moisture droplets along the zone of contact between the mount 62 and the first part 61 of the membrane 60.

The expression "linear zone of contact" is used to mean a zone of contact extending mainly lengthwise and whose thickness is negligible compared to its length. Similarly, the expression "zone of point contact" is used to mean a zone of contact whose area is negligible compared to the total surface area of the first part 61 of the membrane 60 or of the mount 62.

The membrane 60 is located just downstream of the mount 62 relative to the direction of air flow along the conduit 3 from the cooling means 4 to the first compartment 11.

The mount 62 comprises a perimetric frame 65 that extends around and thus delimits the opening 63.

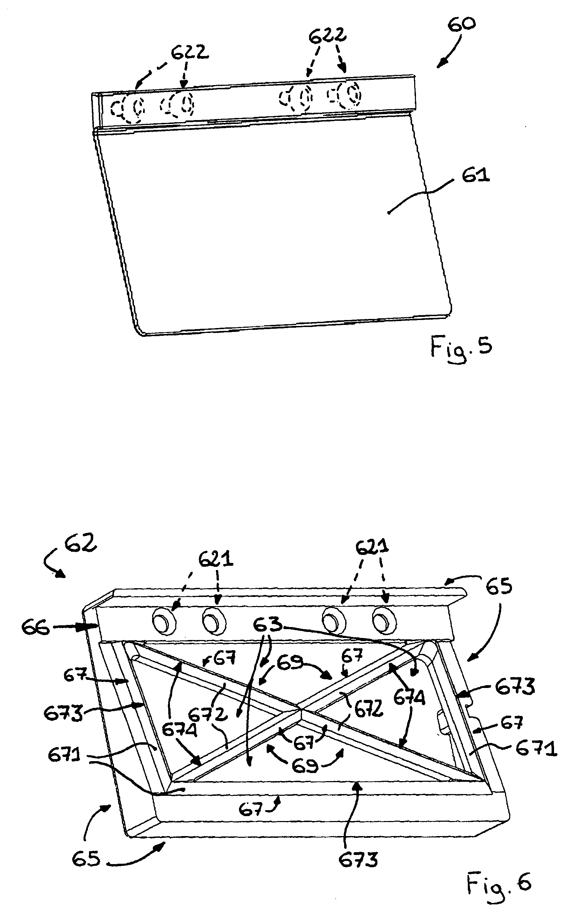

The membrane 60 is connected in cantilever fashion to the mount 62 at one edge of the frame 65. The dashed lines in Figure 5 in particular indicate inserts 622 (hidden by the membrane 60) by which the membrane 60 is connected to the mount 62. Figure 6, on the other hand, shows housings 621 formed on the mount 62 and designed to accommodate the inserts 622. In this way, the air flowing in the conduit 3 from the cooling means 2 to the first compartment 11 can easily move the part of the membrane 60 furthest from the edge of it connected to the frame 65 away from the mount 62 and crosses to the other side. The above mentioned method by which the membrane 60 is joined to the mount 62 is a non-limiting example.

Relative to the physical vertical, the edge at which the membrane 60 is connected in cantilever fashion to the mount 62 is the upper edge 66 of the frame 65. Thus, when the air flow in the conduit 3 stops, the weight of the first part 61 of the membrane 60 enables the first part 61 of the membrane 60 to easily move from the second position back to the first position.

When the first part 61 of the membrane 60 is in the first position, the total zone of contact between the first part 61 of the membrane 60 and the frame 65 is substantially linear.

The at least one protuberance 67, which forms at least one zone of linear contact between the first part 61 of the membrane 60 and the mount 62 when the first part 61 of the membrane 60 is in the first position, comprises or coincides with a relief portion 671 formed on a section of the frame 65. In this case, the protuberance 67 forms part of the mount 62. The relief portion 671 thus forms part of the frame 65.

The relief portion 671 formed on a section of the frame 65 extends around the opening 63 along the edges of the frame 65 other than the one by which the first part 61 of the membrane 60 is connected in cantilever fashion.

Advantageously, the relief portion 671 formed on a section of the frame 65 is tapered. Advantageously, the relief portion 671 forms a convex body which, when the first part 61 of the membrane 60 is in the first position, rests on a planar surface of the first part 61 of the membrane 60.

As illustrated by way of example in Figure 6, the relief portion 671 formed on at least one section of the frame 65 is wedge-shaped and forms at the top a sharp edge 673 that defines at least one portion of the entire zone of contact between the frame 65 and the first part 61 of the membrane 60.

Advantageously, the base edge 673 is formed at the intersection of the two planes made by the sides of the wedge of the protuberance 67. The top edge 673 of the relief portion 671 is parallel to the perimeter of the opening 63 of the frame 65.

Advantageously, the top edge 673 constitutes the entire zone of contact between the frame 65 and the first part 61 of the membrane 60, when the latter is in the first position.

The protuberance 67 of the at least one section of the mount 62 extends around the opening 63 along the edges of the frame 65 other than the one by which the first part 61 of the membrane 60 is connected in cantilever fashion. Advantageously, the protuberance 67 of the at least one section of the mount 62 extends uninterruptedly between a first and a second point along the perimeter of the opening 63 so that the opening 63 is sealed hermetically when closed.

The mount 62 comprises a grille 69 which partly obstructs the opening 63 and which is formed on the inside of the area delimited by the frame 65.

The grille 69 comprises a plurality of elongate members intersecting each other. The elongate members conveniently intersect each other at the centre of the opening 63. In particular, the grille 69 comprises a cross.

Advantageously, the frame 65 has the shape of a quadrilateral and the ends of the cross are connected at least to the two bottom corners of the frame 65.

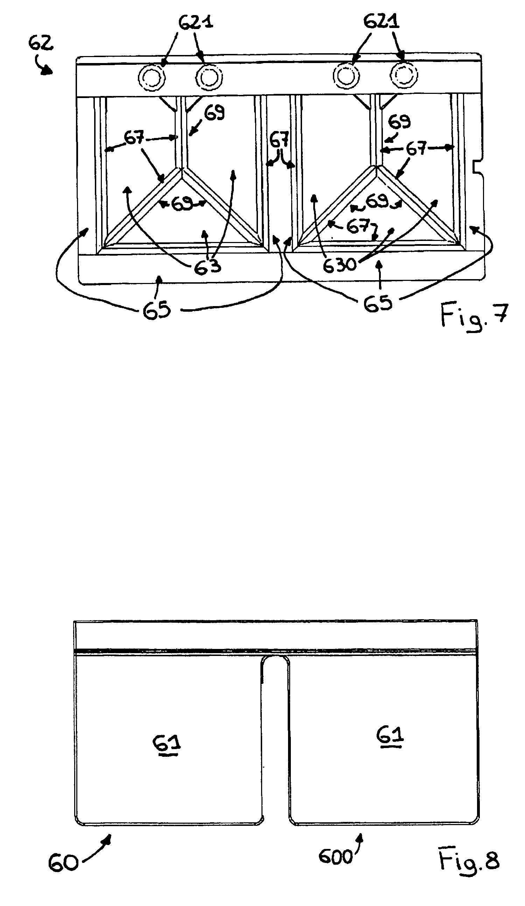

This reduces the risk of the first part 61 of the membrane 60 getting stuck to the frame 65 compared to the case where the ends of the cross are connected to the points half way along the edges of the frame 65 (that is, in the embodiment where the cross is shaped like the graphical "+" sign). In one particular embodiment, the ends of the cross are connected to all four corners of the frame 65 (in this case the cross is shaped like the letter "X" - see Figure 6) or the cross is shaped like an upturned "Y" connected at the two bottom corners of the frame 65 and along the upper edge of the frame 65 (see Figure 7). The grille 69 prevents the membrane 60 from getting stuck inside the opening 63 of the mount 62, with the risk of irreversibly occluding the flow of air and impairing the operation of the device 1.

When the first part 61 of the membrane 60 is in the first position, the entire zone of contact between the first part 61 of the membrane 60 and the grille 69 is substantially a zone of linear or point contact.

The at least one protuberance 67, which forms at least one zone of linear or point contact between the first part 61 of the membrane 60 and the mount 62 when the first part 61 of the membrane 60 is in the first position, comprises or coincides with at least one relief portion 672 advantageously formed on at least one section of the grille 69. In this case, the at least one protuberance 67 forms part of the mount 62. The at least one protuberance 67, which forms at least one zone of linear or point contact between the first part 61 of the membrane 60 and the mount 62 when the first part 61 of the membrane 60 is in the first position, conveniently comprises or coincides with at least one relief portion 672 formed on the whole of the grille 69.

Advantageously, the at least one protuberance 67 of the mount 60 comprises at least one relief portion 671 formed on the frame 65 and at least one relief portion 672 formed on the grille 69.

Advantageously, the at least one relief portion 672 formed on at least one section of the grille 69 is tapered.

The at least one relief portion 672 formed on at least one section of the grille 69 is wedge-shaped and forms at the top a sharp edge 674 that at least partly defines the zone of contact between the grille 69 and the first part 61 of the membrane 60. The top edge 674 extends along the line of principal extension of the elongate members constituting the grille 69.

Advantageously, the grille 69 comprises a plurality of separate relief portions 672 which, when the first part 61 of the membrane 60 is in the first position, extend towards the first part 61 of the membrane 60, each of the relief portions 672 defining a respective zone of linear or point contact between the grille 69 and the first part 61 of the membrane 60.

Advantageously, the relief portions 672 comprise tapered, pyramid-shaped elements, which may be truncated or rounded at the tip, in such a way that each substantially defines a zone of point contact.

As illustrated by way of non-limiting example in Figure 3, the first part 61 of the membrane 60, when in the first position, is in contact with the mount 62 and lies in a plane that makes a non-zero angle with a vertical plane substantially orthogonal to the direction of air flow through the opening 63.

In this way, the force weight helps keep the membrane 60 in the first position at least for as long as a flow of air moves it.

In an embodiment not illustrated the membrane 60 may comprise reinforcement ribbing. This ribbing increases its rigidity, thus constituting an obstacle to opening and, in any case, under equal conditions of air flow, reducing the extent to which the membrane 60 opens because it is heavier.

This reduces the probability that the first part 61 of the membrane 60 will be permanently deformed as a result of the repeated temperature variations it is subjected to. Indeed, if the first part 61 of the membrane 60 is deformed, the closure is no longer hermetically sealed and the operation of the device 1 is thus impaired.

Reference is now made to the embodiment not illustrated where the at least one protuberance 67 is formed on the first part 61 of the membrane 60.

When the first part 61 of the membrane 60 is in the first position, the part of the membrane 60 on which the protuberance 67 is formed faces the mount 62. Advantageously, the protuberance 67 on the membrane 60 is in contact with the edges of the frame 65 to which the first part 61 of the membrane 60 is not connected in cantilever fashion, and/or with the grille 69.

In one particular embodiment, the non-return valve 6 comprises a plurality of membranes 60, 600, each designed to totally occlude a respective opening 63, 630 in the mount 62 (see Figures 7 and 8). In this embodiment, each membrane 60, 600 is advantageously of the type described above.

Similarly, each opening 63, 630 designed to be obstructed by the respective membrane 60, 600 is delimited by a frame 65. Each of the frames 65 is of the type described above. The grille 69 in each opening 63, 630 is also of the type described above. In the case of a plurality of membranes 60, 600, these membranes 60, 600 might also be made in a single part having a connecting portion in common. This would enable the openings 63, 630 to be made smaller and, as a result, smaller air flow rates would be sufficient to open the first part 61 of the membrane 60, 600.

Thus, damage to one of the membranes 60, 600 would not impair the operation of the entire non-return valve 6.

Moreover, reducing the surface area of each membrane 60, 600 reduces the risk its being deformed over time. The example shown in Figures 7 and 8 comprises two membranes 60, 600 occluding the respective openings 63, 630. A larger number of membranes and openings is, however, also imaginable.

Advantageously, the membrane 60, 600 is made of silicone rubber, for example with a material commercially available under the name "Dynasil 1050". Alternatively, the membrane might be made with a siliconed protective backing with a cover film (for example, plasticized calendered PVC).

Advantageously, the device 1 comprises, or coincides with, a fridge freezer 10.

The invention achieves the important advantage of minimizing the risk of the membrane getting stuck in the mount as a result of droplets of moisture trapped between the membrane and the mount. Reducing the force of the surface tension to a minimum is achieved mainly by minimizing the overall zone of contact between the membrane and the mount.

## Claims

1. An electric device for cooling and storing foods, preferably for household use, comprising:
- a first compartment (11) for storing foods;
- means (2) for cooling air used for refrigerating the first compartment (11);
- a conduit (3) for placing the cooling means (2) and the first compartment (11) in fluid communication with each other;
- air movement means (4) which, when activated, force the air to flow from the cooling means (2) to the first compartment (11);
- a non-return valve (6) operatively associated with the conduit (3), said non-return valve (6) comprising a membrane (60) and a mount (62) operatively connected to each other; the mount (62) comprising an opening (63) for the passage of the air, the opening (63) forming part of the conduit (3); the membrane (60) comprising at least one first part (61) that can move between a first position where it faces and is in contact with the mount (62) in order to occlude the opening (63) and a second position where it is at least partly spaced from the mount (62);
the air flow produced by the movement means (4) moving along the conduit (3) from the cooling means (2) to the first compartment (11) through the opening (63) of the mount (62) and applying pressure on the first part (61) of the membrane (60) causing the latter to adopt the second position;
the electric device being **characterized by** further comprising a shutoff valve (5) for obstructing the conduit (3) and which, when closed, prevents the fluid communication between the first compartment (11) and the cooling means (2);
wherein the first part (61) of the membrane (60) returns to the first position in contact with the mount (62), when the air flow stops, so as to obstruct the passage of the air from the first compartment (11) to the cooling means (2) even when the shutoff valve (5) is open and wherein the mount (62) or the first part (61) of the membrane (60) comprises at least one protuberance (67) which, when the first part (61) of the membrane (60) is in the first position, extends respectively towards the first part (61) of the membrane (60) or towards the mount (62), forming at least one zone of linear or point contact between the mount (62) and the first part (61) of the membrane (60).

2. The device according to claim 1, **characterized in that** the at least one protuberance (67), when the first part (61) of the membrane (60) is in the first position reduces the overall zone of contact between the mount (62) and the first part (61) of the membrane (60) compared to a hypothetical situation where each protuberance (67) allowing contact between the mount (60) and the first part (61) of the membrane (60) is absent.

3. The device according to claim 1 or 2, **characterized in that** the membrane (60) is located immediately downstream of the mount (62) relative to the direction of air flow from the cooling means (4) to the first compartment (11).

4. The device according to claim 1 or 2 or 3, **characterized in that** the mount (62) comprises a perimetric frame (65) that extends around and thus delimits the opening (63), the membrane (60) being connected in cantilever fashion to the mount (62) at one edge of the frame (65).

5. The device according to claim 4, **characterized in that** relative to the physical vertical, the frame (65) comprises an upper edge (66) at which the membrane (60) is connected in cantilever fashion to the mount (62).

6. The device according to claim 4 or 5, **characterized in that** the at least one protuberance (67), which forms at least one zone of linear contact between the first part (61) of the membrane (60) and the mount (62) when the first part (61) of the membrane (60) is in the first position, comprises, or coincides with, a relief portion (671) formed on a section of the frame (65).

7. The device according to claim 6 when dependent on claim 4 or 5, **characterized in that** the relief portion (671) formed on a section of the frame (65) extends around the opening (63) along the edges of the frame (65) other than the one by which the first part (61) of the membrane (60) is connected in cantilever fashion.

8. The device according to claim 6 or 7, **characterized in that** the relief portion (671) formed on a section of the frame (65) is tapered.

9. The device according to any of the claims from 4 to 8, **characterized in that** the mount (62) comprises a grille (69) which partly obstructs the opening (63) and which is formed on the inside of the area delimited by the frame (65), the grille (69) comprising a plurality of elongate members intersecting each other.

10. The device according to claim 9, **characterized in that** the at least one protuberance (67), which forms at least one zone of linear or point contact between the first part (61) of the membrane (60) and the mount (62) when the first part (61) of the membrane (60) is in the first position, comprises, or coincides with, at least one relief portion (672) formed on a section of the grille (69).

11. The device according to claim 10, **characterized in that** the at least one relief portion (672) formed on a section of the grille (69) is tapered.

12. The device according to any of the foregoing claims, **characterized in that** the first part (61) of the membrane (60), when in the first position, is in contact with the mount (62) and lies in a plane that makes a non-zero angle with a vertical plane substantially orthogonal to the direction of air flow through the opening (63).

13. The device according to any of the foregoing claims, **characterized in that** the membrane (60) comprises reinforcement ribbing.

14. The device according to any of the foregoing claims, **characterized in that** the non-return valve (6) comprises a plurality of membranes (60, 600), each designed to occlude a respective opening (63, 630) in the mount (62).

15. The device according to any of the foregoing claims, **characterized in that** it comprises, or coincides with, a fridge freezer (10).

## Patentansprüche

1. Elektrische Vorrichtung zum Kühlen und Lagern von Nahrungsmitteln, bevorzugt für den Haushaltsgebrauch, die Folgendes umfasst:
- ein erstes Fach (11) zum Lagern von Nahrungsmitteln,
- Mittel (2) zum Kühlen von Luft, die zum Kühlen des ersten Fachs (11) verwendet werden,
- eine Leitung (3) zum Platzieren des Kühlmittels (2) und des ersten Fachs (11) in Fluidverbindung miteinander,
- Luftbewegungsmittel (4), die, wenn sie aktiviert werden, Luft zwingen, von dem Kühlmittel (2) zu dem ersten Fach (11) zu strömen,
- ein Rückschlagventil (6), das betrieblich mit der Leitung (3) verbunden ist, wobei das Rückschlagventil (6) eine Membran (60) und ein Gestell (62) umfasst, die betrieblich miteinander verbunden sind, wobei das Gestell (62) eine Öffnung (63) für das Durchgehen der Luft umfasst, wobei die Öffnung (63) Teil der Leitung (3) bildet, wobei die Membran (60) mindestens ein erstes Teil (61) umfasst, das sich zwischen einer ersten Position, in der es dem Gestell (62) gegenüber liegt und mit diesem in Berührung ist, und einer zweiten Position, in der es mindestens teilweise von dem Gestell (62) beabstandet ist, bewegen kann, um die Öffnung (63) zu verschließen,
wobei sich der Luftstrom, der von den Bewegungsmitteln (4) erzeugt wird, entlang der Leitung (3) von dem Kühlmittel (2) zu dem ersten Fach (11) durch die Öffnung (63) des Gestells (62) bewegt und Druck auf das erste Teil (61) der Membran (60) ausübt, was Letztere veranlasst, die zweite Position einzunehmen,
elektrische Vorrichtung **dadurch gekennzeichnet, dass** sie ferner ein Abschaltventil (5) zum Verschließen der Leitung (3) umfasst, und das, wenn es geschlossen ist, die Fluidverbindung zwischen dem ersten Fach (11) und dem Kühlmittel (2) verhindert,
wobei das erste Teil (61) der Membran (60) zu der ersten Position in Berührung mit dem Gestell (62) zurückkehrt, wenn der Luftstrom stoppt, um den Durchgang der Luft von dem ersten Fach (11) zu dem Kühlmittel (2) sogar zu verschließen, wenn das Abschaltventil (5) offen ist, und wobei das Gestell (62) des ersten Teils (61) der Membran (60) mindestens einen Vorsprung (67) umfasst, der, wenn sich das erste Teil (61) der Membran (60) in der ersten Position befindet, sich jeweils zu dem ersten Teil (61) der Membran (60) oder zu dem Gestell (62) erstreckt, indem mindestens eine Zone linearen oder punktförmigen Kontakts zwischen dem Gestell (62) und dem ersten Teil (61) der Membran (60) gebildet wird.

2. Vorrichtung nach Anspruch 1, **dadurch gekennzeichnet, dass** der mindestens eine Vorsprung (67), wenn das erste Teil (61) der Membran (60) in der ersten Position ist, die Gesamtberührungszone zwischen dem Gestell (62) und dem ersten Teil (61) der Membran (60) im Vergleich zu einer hypothetischen Situation reduziert, in der jeder Vorsprung (67), der Kontakt zwischen dem Gestell (60) und dem ersten Teil (61) der Membran (60) erlaubt, fehlt.

3. Vorrichtung nach Anspruch 1 oder 2, **dadurch gekennzeichnet, dass** sich die Membran (60) unmittelbar stromabwärts des Gestells (62) in Bezug zu der Richtung des Luftstroms von dem Kühlmittel (4) zu dem ersten Fach (11) befindet.

4. Vorrichtung nach Anspruch 1 oder 2 oder 3, **dadurch gekennzeichnet, dass** das Gestell (62) einen umfänglichen Rahmen (65) umfasst, der sich um es erstreckt und daher die Öffnung (63) abgrenzt, wobei die Membran (60) auskragend mit dem Gestell (62) an einer Kante des Rahmens (65) verbunden ist.

5. Vorrichtung nach Anspruch 4, **dadurch gekennzeichnet, dass** der Rahmen (65) in Bezug zu der physischen Vertikalen eine Oberkante (66) umfasst, an der die Membran (60) auskragend in Bezug zu dem Gestell (62) verbunden ist.

6. Vorrichtung nach Anspruch 4 oder 5, **dadurch gekennzeichnet, dass** der mindestens eine Vorsprung (67), der mindestens eine Zone linearen Kontakts zwischen dem ersten Teil (61) der Membran (60) und dem Gestell (62) bildet, wenn das erste Teil (61) der Membran (60) in seiner ersten Position ist, einen Reliefabschnitt (671), der auf einem Abschnitt des Rahmens (65) gebildet ist, umfasst oder mit ihm übereinstimmt.

7. Vorrichtung nach Anspruch 6, wenn sie von Anspruch 4 oder 5 abhängt, **dadurch gekennzeichnet, dass** sich der Reliefabschnitt (671), der auf einem Abschnitt des Rahmens (65) ausgebildet ist, um die Öffnung (63) entlang der Kante des Rahmens (65), die nicht die ist, durch die das erste Teil (61) der Membran (60) auskragend verbunden ist, erstreckt.

8. Vorrichtung nach Anspruch 6 oder 7, **dadurch gekennzeichnet, dass** sich der Reliefabschnitt (671), der auf einem Abschnitt des Rahmens (65) gebildet ist, verjüngt.

9. Vorrichtung nach einem der Ansprüche 4 bis 8, **dadurch gekennzeichnet, dass** das Gestell (62) ein Gitter (69) umfasst, das die Öffnung (63) teilweise verschließt und auf der Innenseite der Fläche gebildet ist, die von dem Rahmen (65) begrenzt ist, wobei das Gitter (69) eine Vielzahl länglicher Elemente, die einander schneiden, umfasst.

10. Vorrichtung nach Anspruch 9, **dadurch gekennzeichnet, dass** der mindestens eine Vorsprung (67), der mindestens eine Zone linearen oder punktförmigen Kontakts zwischen dem ersten Teil (61) der Membran (60) und dem Gestell (62) bildet, wenn das erste Teil (61) der Membran (60) in der ersten Position ist, mindestens einen Reliefabschnitt (672), der auf einem Abschnitt des Gitters (69) gebildet ist, umfasst oder mit ihm übereinstimmt.

11. Vorrichtung nach Anspruch 10, **dadurch gekennzeichnet, dass** sich der mindestens eine Reliefabschnitt (672), der auf einem Abschnitt des Gitters (69) gebildet ist, verjüngt.

12. Vorrichtung nach einem der vorhergehenden Ansprüche, **dadurch gekennzeichnet, dass** der erste Teil (61) der Membran (60), wenn es in der ersten Position ist, mit dem Gestell (62) in Berührung ist und in einer Ebene liegt, die einen Winkel nicht gleich null mit einer vertikalen Ebene bildet, die zu der Richtung des Luftstroms durch die Öffnung (63) im Wesentlichen senkrecht ist.

13. Vorrichtung nach einem der vorhergehenden Ansprüche, **dadurch gekennzeichnet, dass** die Membran (60) Verstärkungsrippen umfasst.

14. Vorrichtung nach einem der vorhergehenden Ansprüche, **dadurch gekennzeichnet, dass** das Rückschlagventil (6) eine Vielzahl von Membranen (60, 600) umfasst, die jeweils konzipiert sind, um eine jeweilige Öffnung (63, 630) in dem Gestell (62) zu verschließen.

15. Vorrichtung nach einem der vorhergehenden Ansprüche, **dadurch gekennzeichnet, dass** sie mit einem Kühl-/Gefrierschrank (10) übereinstimmt.

## Revendications

1. Dispositif électrique pour refroidir et stocker des produits alimentaires, de préférence pour une utilisation ménagère, comprenant :
- un premier compartiment (11) pour stocker des produits alimentaires ;
- un moyen (2) pour refroidir l'air utilisé pour réfrigérer le premier compartiment (11) ;
- un conduit (3) pour placer le moyen de refroidissement (2) et le premier compartiment (11) en communication à fluide l'un avec l'autre ;
- un moyen de mouvement d'air (4) qui, quand il est activé, force l'air à s'écouler du moyen de refroidissement (2) au premier compartiment (11) ;
- un clapet de non-retour (6) associé de manière opérationnelle au conduit (3), ledit clapet de non-retour (6) comprenant une membrane (60) et un support (62) reliés de manière opérationnelle l'un à l'autre ; le support (62) comprenant une ouverture (63) pour le passage de l'air, l'ouverture (63) formant une partie du conduit (3) ; la membrane (60) comprenant au moins une première partie (61) qui peut se déplacer entre une première position où elle fait face et est en contact avec le support (62) afin de masquer l'ouverture (63) et une seconde position où elle est au moins en partie espacée du support/62);
le flux d'air produit par le moyen de mouvement (4) se déplaçant le long du conduit (3) depuis le moyen de refroidissement (2) jusqu'au premier compartiment (11) à travers l'ouverture (63) du support (62) et appliquant une pression sur la première partie (61) de la membrane (60) amenant cette dernière à adopter la seconde position ;
le dispositif électrique étant **caractérisé en ce qu'**il comprend en outre une vanne à débit nul (5) pour entraver le conduit (3) et qui, quand elle est fermée, empêche la communication à fluide entre le premier compartiment (11) et le moyen de refroidissement (2) ;
dans lequel la première partie (61) de la membrane (60) revient à la première position en contact avec le support (62), quand le flux d'air s'arrête, afin d'entraver le passage de l'air depuis le premier compartiment (11) jusqu'au moyen de refroidissement (2) même si la vanne à débit nul (5) est ouverte, et
dans lequel le support (62) ou la première partie (61) de la membrane (60) comprend au moins une protubérance (67) qui, lorsque la première partie (61) de la membrane (60) est dans la première position, s'étend respectivement vers la première partie (61) de la membrane (60) ou vers le support (62), formant au moins une zone de contact linéaire ou ponctuel entre le support (62) et la première partie (61) de la membrane (60).

2. Dispositif selon la revendication 1, **caractérisé en ce que** l'au moins une protubérance (67), lorsque la première partie (61) de la membrane (60) est dans la première position, réduit la zone globale de contact entre le support (62) et la première partie (61) de la membrane (60) en comparaison à une situation hypothétique où chaque protubérance (67) permettant un contact entre le support (60) et la première partie (61) de la membrane (60) est absente.

3. Dispositif selon la revendication 1 ou 2, **caractérisé en ce que** la membrane (60) est située immédiatement en aval du support (62) par rapport au sens de flux d'air allant du moyen de refroidissement (4) au premier compartiment (11).

4. Dispositif selon la revendication 1 ou 2 ou 3, **caractérisé en ce que** le support (62) comprend un châssis périmétrique (65) qui s'étend autour et délimite ainsi l'ouverture (63), la membrane (60) étant reliée en porte-à-faux au support (62) au niveau d'un bord du châssis (65).

5. Dispositif selon la revendication 4, **caractérisé en ce que** par rapport à la verticale physique, le châssis (65) comprend un bord supérieur (66) au niveau duquel la membrane (60) est reliée en porte-à-faux au support (62).

6. Dispositif selon la revendication 4 ou 5, **caractérisé en ce que** l'au moins une protubérance (67), qui forme au moins une zone de contact linéaire entre la première partie (61) de la membrane (60) et le support (62) lorsque la première partie (61) de la membrane (60) est dans la première position, comprend, ou coïncide avec, une partie en relief (671) formée sur une section du châssis (65).

7. Dispositif selon la revendication 6 lorsque dépendante de la revendication 4 ou 5, **caractérisé en ce que** la partie en relief (671) formée sur une section du châssis (65) s'étend autour de l'ouverture (63) le long des bords du châssis (65) autres que celui par lequel la première partie (61) de la membrane (60) est reliée en porte-à-faux.

8. Dispositif selon la revendication 6 ou 7, **caractérisé en ce que** la partie en relief (671) formée sur une section du châssis (65) est effilée.

9. Dispositif selon l'une quelconque des revendications 4 à 8, **caractérisé en ce que** le support (62) comprend un grillage (69) qui entrave en partie l'ouverture (63) et qui est formé sur l'intérieur de la zone délimitée par le châssis (65), le grillage (69) comprenant une pluralité d'éléments d'allongés se croisant.

10. Dispositif selon la revendication 9, **caractérisé en ce que** l'au moins une protubérance (67), qui forme au moins une zone de contact linéaire ou ponctuel entre la première partie (61) de la membrane (60) et le support (62) lorsque la première partie (61) de la membrane (60) est dans la première position, comprend, ou coïncide avec, au moins une partie en relief (672) formée sur une section du grillage (69).

11. Dispositif selon la revendication 10, **caractérisé en ce que** l'au moins une partie en relief (672) formée sur une section du grillage (69) est effilée.

12. Dispositif selon l'une quelconque des revendications précédentes, **caractérisé en ce que** la première partie (61) de la membrane (60), quand elle est dans la première position, est en contact avec le support (62) et se situe dans un plan qui fait un angle non nul avec un plan vertical sensiblement orthogonal à la direction de flux d'air à travers l'ouverture (63).

13. Dispositif selon l'une quelconque des revendications précédentes, **caractérisé en ce que** la membrane (60) comprend des nervures de renfort.

14. Dispositif selon l'une quelconque des revendications précédentes, **caractérisé en ce que** le clapet de non-retour (6) comprend une pluralité de membranes (60, 600), chacune conçue pour masquer une ouverture respective (63, 630) dans le support (62).

15. Dispositif selon l'une quelconque des revendications précédentes, **caractérisé en ce qu'**il comprend, ou coïncide avec, un compartiment congélateur de réfrigérateur (10).
